# EUROPÄISCHE PATENTSCHRIFT

(11) **EP 1 084 896 B1**
(45) Veröffentlichungstag und Bekanntmachung des Hinweises auf die Patenterteilung: **12.01.2005**
(21) Anmeldenummer: 00117070.3
(22) Anmeldetag: 09.08.2000
(51) Int. Cl.: B60N 2/02, B60N 2/48

(54) **Kopfstützenantrieb**
Headrest drive
Motorisation pour appui-tête

(30) Priorität: 17.09.1999 DE 19944571
(43) Veröffentlichungstag der Anmeldung: 21.03.2001
(73) Patentinhaber: Siemens Aktiengesellschaft, 80333 München (DE)
(72) Erfinder: Kober, Rainer, 64297 Darmstadt (DE)

(56) Entgegenhaltungen:
- EP-A- 0 756 964
- DE-A- 3 244 504
- DE-A- 3 440 525
- DE-A- 3 545 142
- DE-A- 4 001 361
- DE-A- 19 738 199

## Beschreibung

Die Erfindung befaßt sich mit einem Kopfstützenantrieb zum Verschwenken einer Kopfstütze zwischen einer Gebrauchsstellung und einer abgeklappten Ruhestellung, wobei die Kopfstütze an einer motorisch angetriebenen Schwenkwelle angeordnet ist, wobei der Antriebsmotor eine Kurbelwelle antreibt, an deren Kurbelzapfen eine Kurbelstange angelenkt ist, die mit einer an der Schwenkwelle angeordneten Schwinge gelenkig verbunden ist.

Aus Sicherheitsaspekten ist es heutzutage üblich, daß Kraftfahrzeuge auf allen vorhandenen Sitzplätzen mit Kopfstützen ausgestattet werden. Da jedoch in Kraftfahrzeugen selten alle Sitzplätze genutzt werden, wird die Rundumsicht für den Fahrer durch die nicht genutzten, aufgerichteten Kopfstützen stark beeinträchtigt. Manuell aufzurichtende, abklappbare Kopfstützen sind seit längerer Zeit bekannt, wobei allerdings auch ein Aufrichten der Kopfstütze mit Hilfe des Antriebes wünschenswert ist.

Beispielsweise ist in der DE 40 01 361 A1 ein Kopfstützenantrieb der eingangs genannten Art beschrieben, bei welchem die Schwenkwelle über einen Kettentrieb mit einem Antriebsmotor verbunden ist. Bei einer derartigen Ausbildung des Kopfstützenantriebes ist es notwendig, die Drehrichtung des Antriebsmotors zwischen den Endstellungen umzukehren, wodurch ein steuerungstechnischer Mehraufwand erforderlich ist.

Ein Kopfstützenantrieb der eingangs genannten Art ist ebenfalls aus der DE-A-35 45 142 bekannt, die u.a, ein Schneckengetriebe zwischen Antriebsmotor und Kurbelwelle im Antriebsstrang aufweist (Oberbegriff des Anspruchs 1).

Aus der DE-A-32 44 504 ist ein Kopfstützenantrieb zur Höhenverstellung einer Kopfstütze bekannt, der über ein Kurbelgetriebe von einem nur in eine Drehrichtung antreibbaren Elektromotor angetrieben wird. Dabei wird die Kopfstütze von dem Kurbeltrieb zu einer Linearbewegung angetrieben.

Aus der DE-A-197 38 199 ist ein Fahrzeugsitz bekannt, der längsverstellbar und dessen Kopfstütze in Abhängigkeit von dieser Längsverstellung höherverstellbar ist. Dazu sind sowohl am Boden des Fahrzeugs als auch an der Rückenlehne des Fahrzeugsitzes jeweils Zahnstangen angeordnet, in die die Verstellungen bewirkende Ritzel eingreifen. Die Drehachsen der Ritzel sind über eine flexible Torsowelle drehfest miteinander verbunden.

Aus der DE-A-34 40 525 ist eine Vorrichtung zur Höhenverstellung von Kopfstützen bekannt, die sowohl beim Einlegen des Rückwärtsganges als auch bei Freiwerden eines Sitzes heruntergefahren werden.

Die Aufgabe der Erfindung ist es, einen Kopfstützenantrieb zu schaffen, der eine einfachere Ansteuerung ermöglicht.

Erfindungsgemäß wird die Aufgabe dadurch gelöst, daß der Antriebsmotor die Kurbelwelle über eine flexible Antriebswelle antreibt, die über das Schneckengetriebe mit der Kurbelwelle gekoppelt ist.

Ein derartiger, nach dem Prinzip eines Gelenkvierecks aufgebauter Antrieb, führt bei fortwährend in einer Richtung rotierendem Antriebsmotor zu einer hin- und hergehenden Schwenkbewegung der Kopfstütze, so daß die Rotation des Antriebsmotors lediglich in bestimmten Stellungen unterbrochen zu werden braucht, um die Kopfstütze in ihrer Gebrauchsstellung oder ihrer abgeklappten Ruhestellung verharren zu lassen. Eine Umkehrung der Drehrichtung und die damit verbundene kompliziertere Ansteuerung entfällt.

Die flexible Antriebswelle ermöglicht bei der Positionierung des elektrischen Antriebsmotors größere Variationsmöglichkeiten. Der Motor kann je nach Anforderung in der Rückenlehne des betreffenden Fahrzeugsitzes oder der Rückbank, am Rahmen des Sitzes bzw. der Rückbank oder an der Karosserie des Fahrzeugs außerhalb des Sitzes bzw. der Rückbank angeordnet sein. Die Anpassung an verschiedene Sitze und Rückbänke wird dadurch vereinfacht.

Bei entsprechender Selbsthemmung bewirkt das Schneckengetriebe eine Arretierung der Kopfstütze vor allem in der Gebrauchsstellung.

Durch gezielte Auslegung der Längen der Kurbel und der Schwinge kann der Schwenkwinkel der Schwinge beeinflußt werden. Üblicherweise wird man den Kurbeltrieb so gestalten, daß der Schwenkwinkel der Schwinge einen Winkelbereich von ungefähr 90° abdeckt, der es beispielsweise erlaubt, eine aufgerichtete Kopfstütze an der Rückbank eines Fahrzeuges nach hinten in eine Ausnehmung in der Hutablage wegzuklappen.

Vorzugsweise erfolgt die Erfassung der beiden Stellungen der Kopfstütze mit Hilfe eines Mikroschalters. Hierzu sind z. B. zwei um 180° versetzt angeordnete Nocken an der Kurbelwelle vorgesehen, die mit dem Mikroschalter zusammenwirken, der beim Auslösen den Antriebsmotor abschaltet. Bei dieser Lösung genügt ein einfaches Einschalten des Elektromotors zum Verschwenken der Kopfstütze in die jeweils andere Stellung, in welcher der Mikroschalter dann die Schwenkbewegung unterbricht.

Als Alternative zu dieser Schaltung kann eine "Treppenhausschaltung" mit zwei Wechselschaltern Verwendung finden, von welchen einer am jeweiligen Sitz oder zentral am Armaturenbrett angeordnet ist, während der andere von von dem Antriebsmotor angetriebenen Nocken betätigbar ist. Dabei können entweder zwei um 180° versetzte Nocken mit einem Wechseltaster zusammenwirken oder die Nockenscheibe kann derart konturiert sein, daß sie den Mikroschalter über einen Drehwinkelbereich von 180° in der einen und über den restlichen Drehwinkelbereich in der anderen Stellung hält.

Zur Realisierung einer besonders kostengünstigen Lösung kann ferner vorgesehen sein, daß die Schwenkwelle mit zwei oder drei Kopfstützen einer Rückbank eines Fahrzeuges verbunden ist.

Die Schwenkwelle des Kurbelantriebes ist üblicherweise in der Rückenlehne angeordnet und über ein Gestänge mit der Kopfstütze verbunden, das deren Feineinstellung bezüglich ihrer Höhe und/oder Neigung ermöglicht.
Besonders vorteilhaft ist eine Kombination des erfindungsgemäßen Kopfstützenantriebes mit einer Sitzplatzerkennung, die bei belegtem Sitzplatz ein Aufrichten der entsprechenden Kopfstütze in die Gebrauchsstellung veranlaßt und bei freiem Sitzplatz ein Abklappen der Kopfstütze bewirkt.

Nachfolgend wird anhand der beigefügten Zeichnungen näher auf ein Ausführungsbeispiel der Erfindung eingegangen. Es zeigen:
- Fig. 1: eine schematische Darstellung des Kopfstützenantriebes bei aufgerichteter Kopfstütze;
- Fig. 2: eine Darstellung entsprechend Fig. 1 mit abgeklappter Kopfstütze;
- Fig. 3: eine schematische Darstellung der Anordnung des Antriebsmotors;
- Fig. 4: eine Darstellung ähnlich Fig. 3 einer weiteren Ausführungsform,
- Fig. 5: eine Prinzipskizze einer Schaltung zur Ansteuerung des Antriebsmotors;
- Fig. 6: schematisch eine Nockenkontur zum Zusammenwirken mit dem motorseitigen Wechselschalter,
- Fig. 7: eine Prinzipskizze einer abgewandelten Schaltung zur Ansteuerung des Antriebsmotors.

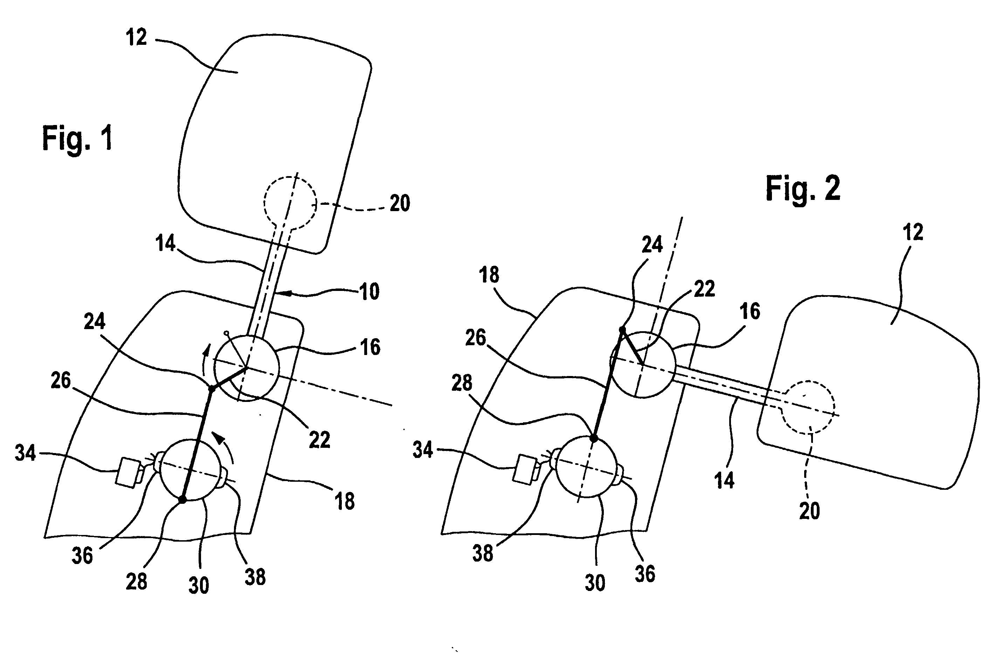

In Fig. 1 ist schematisch ein Kopfstützenantrieb 10 dargestellt, der zum Verschwenken einer Kopfstütze 12 dient, die über ein Gestänge 14 an einer Schwenkwelle 16 im oberen Bereich der Rückenlehne 18 einer Fahrzeugrückbank angeordnet ist. Das Gestänge 14 verfügt im Bereich der Kopfstütze über eine Feinjustierung 20, die in herkömmlicher Weise mittels Rastungen (nicht gezeigt) eine Neigungsverstellung der Kopfstütze 12 bezüglich des Gestänges 14 ermöglicht. Eine Ausziehvorrichtung zur Verstellung der Höhe der Kopfstütze 12 ist ebenfalls in das Gestänge 14 integriert (nicht dargestellt).

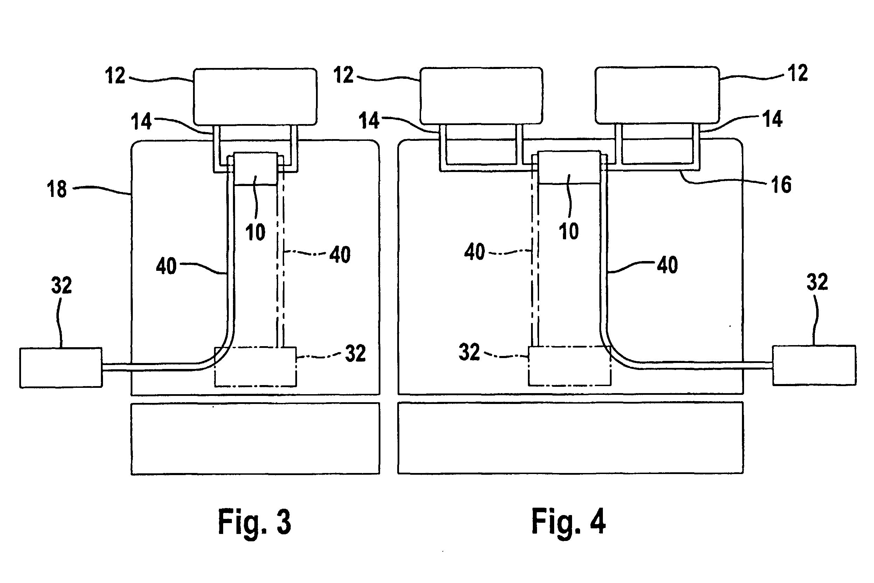

An der Schwenkwelle 16 ist eine Schwinge 22 vorgesehen, an welcher in bestimmtem Abstand zur Wellenmittelachse in einem ersten Gelenkpunkt 24 eine Kurbelstange 26 angelenkt ist. Das andere Ende der Kurbelstange 26 ist in einem zweiten Gelenkpunkt 28 an einem Kurbelzapfen einer Kurbelwelle 30 angelenkt, wobei der Abstand des Kurbelzapfens von der Wellenmittelachse kleiner gewählt ist als der Abstand des ersten Gelenkpunktes 24 der Schwinge 22 von der Mittelachse der Schwenkwelle 16. Die Kurbelwelle 30 wird von einem elektrischen Antriebsmotor 32 (siehe Fig. 3 und 4) angetrieben, worauf später noch genauer eingegangen wird.

Der Kurbeltrieb ist als Gelenkviereck aufgebaut, wobei aufgrund der bereits angesprochenen Wahl der Hebellängen dieses Gelenkviereckes die Schwenkwelle 16 bei einer vollständigen Umdrehung der Kurbelwelle 30 eine über einen Winkelbereich von ungefähr 90° verlaufende hin- und hergehende Schwenkbewegung ausführt. Durch Variation der Länge der Schwinge 22 ist eine gezielte Anpassung des Schwenkwinkels möglich, wobei bei einer Verkleinerung der Schwingenlänge der Schwenkwinkel zunimmt und bei einer Vergrößerung der Schwingenlänge ein kleinerer Schwenkwinkel erreicht wird.

In der in Fig. 1 dargestellten aufgerichteten Stellung der Kopfstütze 12 befindet sich die Kurbelstange 26 mit Bezug auf die Rücklehne 18 in ihrer unteren Totpunktstellung.

In Fig. 2 ist die abgeklappte Ruhestellung der Kopfstütze 12 dargestellt, in welcher die Kurbelstange 26 ihre obere Totpunktlage einnimmt.

Um die beiden Endstellungen der Kopfstütze 12 erfassen zu können, ist im Bereich der Kurbelwelle 30 ein Mikroschalter 34 oder ein vergleichbarer Sensor vorgesehen, der durch an der Kurbelwelle 30 vorgesehene Nocken 36, 38 betätigbar ist. Zur Erfassung der aufgerichteten Position der Kopfstütze 12 ist ein erster Nocken 36 vorgesehen, während die Auslösung des Mikroschalters 34 in der abgeklappten Ruhestellung der Kopfstütze 12 durch einen um 180° versetzt an der Kurbelwelle 30 angeordneten zweiten Nocken 38 erfolgt. Da sich die Kurbelstange 26 in den beiden erfaßbaren Stellungen der Kopfstütze 12 jeweils in einer Totpunktlage befindet, kann ein Verstellen der Kopfstütze 12 durch einfaches Weiterdrehen der Kurbelwelle 30 ohne Drehrichtungsumkehr erreicht werden, wodurch der steuerungstechnische Aufwand erheblich vereinfacht wird.

In Fig. 3 ist die Ankopplung des elektrischen Antriebsmotors an den Kopfstützenantrieb 10 dargestellt. Der elektrische Antriebsmotor 32 treibt eine flexible Antriebswelle 40 an, die über ein Schneckengetriebe (nicht näher dargestellt) an die Kurbelwelle 30 gekoppelt ist. Die Selbsthemmung eines derartigen Schneckengetriebes kann bei entsprechender Auslegung ausreichend sein, um die Kopfstütze 12 in ihrer aufgerichteten Stellung zu arretieren, so daß sie auch bei Unfällen die entstehenden Kräfte aufnehmen kann, ohne abzuklappen. Hierbei ist auch die Charakteristik des Kurbeltriebes von Vorteil, der in der Nähe der Totpunktlagen der Kurbelstange 26 ein sehr großes Übersetzungsverhältnis aufweist.

Die flexible Antriebswelle 40 erlaubt große Freiheiten bei der Anordnung des elektrischen Antriebsmotors 32, wobei in Fig. 3 eine Anordnung in der Rückenlehne 18 und eine karosserieseitige Anordnung des Motors 32 skizziert sind.

Eine weitere Ausführungsform des Kopfstützenantriebes ist in Fig. 4 gezeigt, wobei der Kopfstützenantrieb 10 selbst im wesentlichen unverändert bleibt, die Schwenkwelle 16 jedoch derart verlängert ist, daß zwei nebeneinander liegende Kopfstützen 12 gleichzeitig verschwenkbar sind. Eine derartige Lösung ist gegenüber einzeln verschwenkbaren Kopfstützen kostengünstiger und kann beispielsweise auch bei einer asymmetrisch geteilten Rückbank eines Fahrzeuges Verwendung finden, die über eine abklappbare Mittelkopfstütze verfügen soll. Auch das gleichzeitige Verschwenken von drei Kopfstützen einer Rückbank ist denkbar, sofern diese nicht geteilt ausgeführt ist.

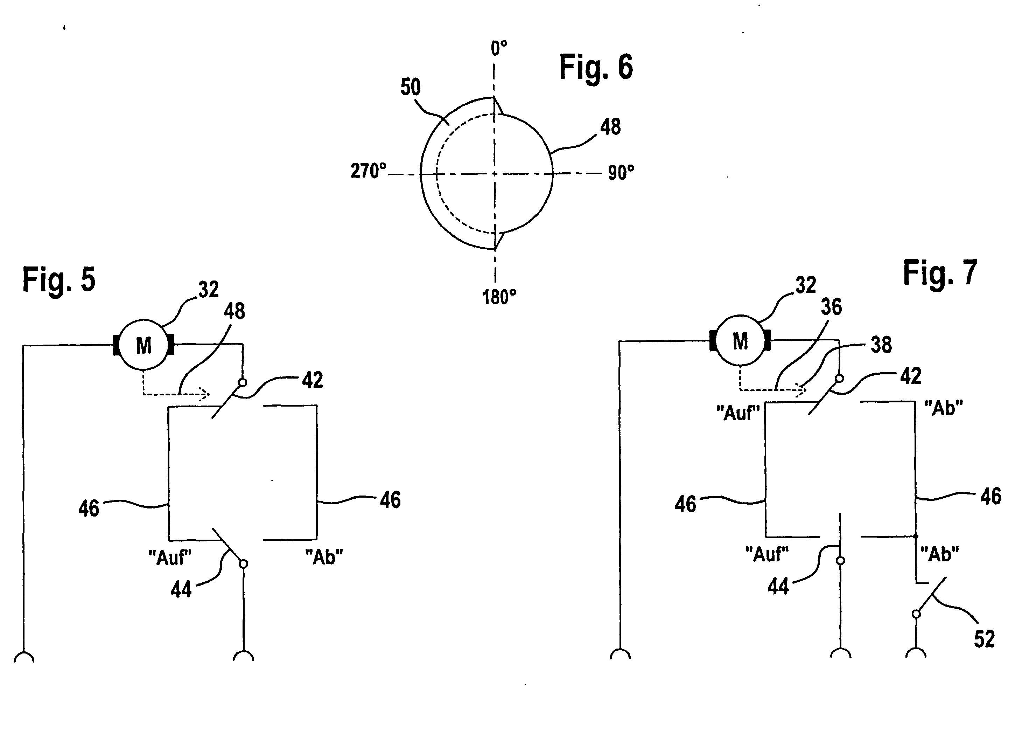

In Fig. 5 ist eine Prinzipskizze einer Schaltung zur Ansteuerung des Antriebsmotors 30 dargestellt, die ähnlich einer "Treppenhausschaltung" aufgebaut ist. Hierbei sind entsprechend zwischen zwei Wechselschaltern 42, 44 zwei elektrische Leitungen 46 vorgesehen. Der erste Wechselschalter 42 ist als Bedienschalter zum manuellen Ansteuern des Antriebsmotors 32 am jeweiligen Sitz oder zentral am Armaturenbrett angeordnet. Der zweite Wechselschalter 44 ist als Mikroschalter ausgebildet und ersetzt den Mikroschalter 34 der zuvor beschriebenen Ausführungsform. Der Wechselschalter 44 kann entweder als Wechseltastschalter ausgebildet sein, wobei das Umschalten zwischen den beiden Stellungen durch die Nocken 36, 38 erfolgen kann. Als Alternative zu einem Wechseltastschalter kann auch ein Wechselschalter vorgesehen sein, welcher der Kontur einer Nockenscheibe 48 folgt, die über eine über ungefähr 180° des Umfangs verlaufende Nockenerhebung 50 verfügt.

Die in Fig. 5 dargestellte Stellung der Wechselschalter 42, 44 ist während des Aufstellens der Kopfstütze 12 gegeben. Sobald die Kopfstütze aufgerichtet ist, wird der Wechselschalter 44 durch einen Nocken 36, 38 oder durch Nachfolgen der Kontur der Nockenscheibe 48 in seine andere Stellung bewegt. Dadurch wird die Stromzufuhr zu dem Motor 32 unterbrochen, und die Kopfstütze 12 verharrt in ihrer aufgerichteten Stellung. Möchte man nun die Kopfstütze abklappen, wird der als Wechselschalter oder Kippschalter ausgebildete erste Wechselschalter 42 in seine andere Stellung bewegt. Der elektrische Antriebsmotor 32 läuft erneut an, und nach einer Rotation der Kurbelwelle 30 um 180° wird der Wechselschalter 44 zur Unterbrechung der Stromzufuhr erneut in seine andere Stellung bewegt.

Bei der in Fig. 7 dargestellten Ausführungsform ist zusätzlich zu dem Bedienschalter 42 ein Zentralschalter 52 vorgesehen, mit welchem das Abklappen aller Kopfstützen der Rückbank oder auch des Beifahrersitzes bewirkt werden kann. Der Wechselschalter 42 ist in diesem Fall für jede Kopfstütze individuell am jeweiligen Sitz vorgesehen.

Besondere Vorteile ergeben sich bei einer Kombination des dargestellten Kopfstützenantriebes 10 mit einer Sitzplatzbelegungserkennung, die bei belegtem Sitzplatz ein automatisches Aufrichten der Kopfstütze 12 veranlaßt und dadurch ein Fahren ohne Kopfstütze verhindert und bei nicht belegtem Sitzplatz das Abklappen der Kopfstütze 12 auslöst, um dem Fahrer eine verbesserte Rundumsicht zu ermöglichen.

## Patentansprüche

1. Kopfstützenantrieb zum Verschwenken einer Kopfstütze (12) zwischen einer aufgerichteten Gebrauchsstellung und einer abgeklappten Ruhestellung, wobei die Kopfstütze (12) an einer motorisch antreibbaren Schwenkwelle (16) angeordnet ist, wobei der Antriebsmotor (32) eine Kurbelwelle (30) antreibt, an deren Kurbelzapfen (28) eine Kurbelstange (26) angelenkt ist, die mit einer an der Schwenkwelle (16) angeordneten Schwinge (22) gelenkig verbunden ist, wobei im Antriebsstrang zwischen Antriebsmotor (32) und Kurbelwelle (30) ein Schneckengetriebe vorgesehen ist,
**dadurch gekennzeichnet, dass** der Antriebsmotor (32) die Kurbelwelle (30) über eine flexible Antriebswelle (40) antreibt, die (40) über das Schneckengetriebe mit der Kurbelwelle (30) gekoppelt ist.

2. Kopfstützenantrieb nach Anspruch 1, **dadurch gekennzeichnet, dass** der Schwenkwinkel der Schwinge (22) ungefähr 90° beträgt.

3. Kopfstützenantrieb nach einem der vorhergehenden Ansprüche, **dadurch gekennzeichnet, dass** der Antriebsmotor (32) in der Rückenlehne (18) des betreffenden Fahrzeugsitzes oder der Rückbank, am Rahmen des Sitzes bzw. der Rückbank oder an der Karosserie des Fahrzeuges außerhalb des Sitzes bzw. der Rückbank angeordnet ist.

4. Kopfstützenantrieb nach einem der vorhergehenden Ansprüche, **dadurch gekennzeichnet, dass** die Schwenkwelle (22) mit zwei oder drei Kopfstützen (12) einer Rückbank eines Fahrzeuges verbunden ist.

5. Kopfstützenantrieb nach einem der vorhergehenden Ansprüche, **dadurch gekennzeichnet, dass** die Schwenkwelle (22) in der Rückenlehne (18) angeordnet und über ein Gestänge (14) mit der Kopfstütze (12) verbunden ist, das eine Feineinstellung der Kopfstütze (12) bezüglich ihrer Höhe und/oder Neigung ermöglicht.

6. Kopfstützenantrieb nach einem der vorhergehenden Ansprüche, **dadurch gekennzeichnet, dass** er mit einer Sitzplatzerkennung zusammenwirkt, die bei belegtem Sitzplatz ein Aufrichten der Kopfstütze (12) und bei freiem Sitzplatz ein Abklappen der Kopfstütze (12) veranlasst.

7. Kopfstützenantrieb nach einem der vorhergehenden Ansprüche, **dadurch gekennzeichnet, dass** zwei um 180° versetzt angeordnete Nocken (36, 38) an der Kurbelwelle (30) vorgesehen sind, die mit einem Mikroschalter (34, 42) zusammenwirken, der beim Auslösen den Antriebsmotor (32) abschaltet.

8. Kopfstützenantrieb nach Anspruch 7, **dadurch gekennzeichnet, dass** der Mikroschalter als Wechseltastschalter (42) ausgebildet ist, der mit einem als Wechselschalter ausgebildeten Auslöseschalter (44) zusammenwirkt.

9. Kopfstützenantrieb nach einem der Ansprüche 1 bis 6, **dadurch gekennzeichnet, dass** an der Kurbelwelle (30) eine Nockenscheibe (48) mit einer ungefähr über 180° reichenden Nockenerhebung (50) vorgesehen ist, die einen Wechselschalter zwischen zwei Positionen verstellt, der mit einem als Wechselschalter (42) ausgebildeten Auslöseschalter (44) zusammenwirkt.

## Claims

1. Headrest drive for pivoting a headrest (12) between an upright operational position and a folded-down rest position, the headrest (12) being arranged on a motor-drivable pivoting shaft (16), the drive motor (32) driving a crankshaft (30) with, coupled to its crank pin (28), a connecting rod (26) which is connected in an articulated manner to a rocker (22) arranged on the pivoting shaft (16), a worm gear mechanism being provided in the drive train between the drive motor (32) and crankshaft (30), **characterized in that** the drive motor (32) drives the crankshaft (30) via a flexible drive shaft (40) which is coupled to the crankshaft (30) via the worm gear mechanism.

2. Headrest drive according to Claim 1, **characterized in that** the pivoting angle of the rocker (22) is approximately 90°.

3. Headrest drive according to one of the preceding claims, **characterized in that** the drive motor (32) is arranged in the backrest (18) of the relevant vehicle seat or the rear bench, on the frame of the seat or the rear bench or on the body of the vehicle outside the seat or the rear bench.

4. Headrest drive according to one of the preceding claims, **characterized in that** the pivoting shaft (22) is connected to two or three headrests (12) of a rear bench of a vehicle.

5. Headrest drive according to one of the preceding claims, **characterized in that** the pivoting shaft (22) is arranged in the backrest (18) and is connected to the headrest (12) via a linkage (14) which permits the headrest (12) to be finely adjusted with respect to its height and/or inclination.

6. Headrest drive according to one of the preceding claims, **characterized in that** it interacts with a seat recognition means which, if the seat is occupied, causes the headrest (12) to be set upright and, if the seat is free, causes the headrest (12) to be folded down.

7. Headrest drive according to one of the preceding claims, **characterized in that** two cams (36, 38) which are offset by 180° are provided on the crankshaft (30) and interact with a microswitch (34, 42) which, when triggered, switches off the drive motor (32).

8. Headrest drive according to Claim 7, **characterized in that** the microswitch is designed as a two-way pushbutton switch (42) which interacts with a triggering switch (44) designed as a two-way switch.

9. Headrest drive according to one of Claims 1 to 6, **characterized in that** a cam disc (48) having a cam lobe (50) reaching approximately over 180° is provided on the crankshaft (30) and moves a two-way switch between two positions, the two-way switch interacting with a triggering switch (44) designed as a two-way switch (42).

## Revendications

1. Entraînement pour appuie-tête destiné à faire pivoter un appuie-tête (12) entre une position relevée d'utilisation et une position rabattue de repos, l'appuie-tête (12) étant disposé sur un arbre (16) de pivotement à entraînement motorisé, le moteur (32) d'entraînement entraînant un arbre (30) à manivelle sur le maneton (28) duquel est articulée une bielle (26) qui est reliée en articulation à une bielle (22) oscillante, et un engrenage à vis sans fin étant prévu dans la ligne d'entraînement entre le moteur (32) d'entraînement et l'arbre (30) à manivelle, **caractérisé en ce que** le moteur (32) d'entraînement entraîne l'arbre (30) à manivelle par l'intermédiaire d'un arbre (40) d'entraînement souple qui est couplé à l'arbre (30) à manivelle par l'intermédiaire de l'engrenage à vis sans fin.

2. Entraînement pour appuie-tête suivant la revendication 1, **caractérisé en ce que** l'angle de pivotement de la bielle ( 22) oscillante est environ égal à 90°.

3. Entraînement pour appuie-tête suivant l'une des revendications précédentes, **caractérisé en ce que** le moteur (32) d'entraînement est disposé dans le dossier (18) du siège de véhicule concerné ou de la banquette arrière, sur le cadre du siège ou de la banquette arrière ou bien en dehors du siège ou de la banquette arrière, sur la carrosserie du véhicule.

4. Entraînement pour appuie-tête suivant l'une des revendications précédentes, **caractérisé en ce que** l'arbre (22) de pivotement est relié à deux ou trois appuie-tête (12) d'une banquette arrière d'un véhicule.

5. Entraînement pour appuie-tête suivant l'une des revendications précédentes, **caractérisé en ce que** l'arbre (22) de pivotement est disposé dans le dossier (18) et relié à l'appuie-tête (12) par l'intermédiaire d'une tringlerie (14) qui permet un réglage fin de l'appuie-tête (12) en hauteur et/ou en inclinaison.

6. Entraînement pour appuie-tête suivant l'une des revendications précédentes, **caractérisé en ce qu'**il coopère avec un système de repérage des sièges qui produit le relevage de l'appuie-tête (12) lorsque le siège est occupé et le rabattement de l'appuie-tête (12) lorsque le siège est libre.

7. Entraînement pour appuie-tête suivant l'une des revendications précédentes, **caractérisé en ce que** deux cames (36, 38) disposées décalées de 180° sont prévues sur l'arbre (30) à manivelle, qui coopèrent avec un interrupteur (34, 42) miniature qui, lorsqu'il est activé, coupe le moteur (32) d'entraînement.

8. Entraînement pour appuie-tête suivant la revendication 7, **caractérisé en ce que** l'interrupteur miniature est conçu comme poussoir (42) inverseur qui coopère avec un déclencheur (44) conçu comme commutateur inverseur.

9. Entraînement pour appuie-tête suivant l'une des revendications 1 à 6, **caractérisé en ce qu'**est prévu, sur l'arbre (30) à manivelle, un disque (48) à came doté d'un bossage (50) de came s'étendant environ sur 180° qui déplace entre deux positions un commutateur inverseur qui coopère avec un déclencheur (44) conçu comme commutateur inverseur (42).
